# DEMANDE DE BREVET EUROPEEN

(11) **EP 1 326 195 A1**
(43) Date de publication de la demande: **09.07.2003**
(21) Numéro de dépôt: 02026859.5
(22) Date de dépôt: 02.12.2002
(51) Int. Cl.: G06K 7/00, B60R 25/00, G07C 9/00

(54) **Procédé d'émission d'une requête vers un badge**

(30) Priorité: 27.12.2001 FR 0116899
(71) Demandeur: Siemens VDO Automotive S.A.S., 31036 Toulouse Cédex 01 (FR)
(72) Inventeur: Brillon, Alain, 31270 Villeneuve-Tolosane (FR)

(57) **Abrégé**

Dans ce procédé d'émission d'une requête vers un badge d'un système mains libres, la requête est transmise par un signal d'une fréquence prédéterminée, à l'aide d'antennes destinées à émettre à l'intérieur d'un habitacle de véhicule.

L'amplitude du signal transmettant une seule et même requête varie au cours de la transmission de cette même requête entre deux valeurs extrêmes (A1, A2), et en ce que l'amplitude correspondant à la valeur extrême inférieure (A2) est suffisante pour que la partie de la requête émise avec cette amplitude minimale (A2) soit perçue uniquement dans la zone prédéfinie.

## Description

La présente invention concerne un procédé d'émission d'une requête vers un badge d'un système mains libres.

Un système mains libres permet d'accéder à son véhicule et de démarrer celui-ci sans avoir à utiliser de clé mécanique. L'utilisateur du véhicule est simplement muni d'un badge qui se présente généralement sous la forme d'une carte électronique. Le véhicule est équipé d'un dispositif de commande et de gestion associé à des antennes disposées à son bord. Ce dispositif est destiné à détecter un badge à proximité du véhicule ou dans celui-ci pour ensuite déterminer si ce badge est ou non un badge autorisé pour le véhicule correspondant. Lorsque le badge est détecté et reconnu comme étant un badge autorisé pour le véhicule, le porteur du badge peut pénétrer à l'intérieur du véhicule en saisissant simplement une poignée de portière et, dans certains systèmes, il peut également démarrer le moteur du véhicule par simple action sur un bouton.

Dans la plupart des systèmes mains libres, un groupe d'antennes est destiné à détecter la présence du badge à l'extérieur du véhicule et un autre groupe d'antennes à l'intérieur de celui-ci. Ces antennes émettent en direction du badge un signal LF (Low Frequency ou basse fréquence) d'une fréquence typiquement de l'ordre de 125 kHz. Ces antennes ont une portée faible, généralement de l'ordre du mètre. Il est ainsi possible, de façon connue, de localiser un badge à l'intérieur, ou à l'extérieur, du véhicule.

Pour localiser un badge à l'intérieur du véhicule, les antennes intérieures émettent un signal LF en direction du badge, ce signal étant porteur d'une demande. Lorsque le badge situé à l'intérieur du véhicule reçoit ce signal, il répond à la demande en envoyant un message RF (Radio Fréquence) typiquement d'une fréquence de 433 MHz.

Pour éviter de détecter un badge se trouvant à l'extérieur du véhicule comme étant un badge situé à l'intérieur du véhicule, la puissance d'émission des antennes intérieures est réglée à un niveau tel que, aux limites intérieures de l'habitacle du véhicule, la puissance du signal corresponde sensiblement à la sensibilité de réception d'un badge. Ainsi, on est sûr qu'en tout point placé à l'extérieur du véhicule, un badge ne pourra pas recevoir un signal émis par les antennes intérieures.

Cette solution permet donc de reconnaître avec certitude si un badge qui a été détecté se trouve à l'intérieur ou à l'extérieur du véhicule mais crée également des zones d'ombre à l'intérieur de l'habitacle. En outre, de plus en plus d'équipements électroniques se trouvent à l'intérieur de l'habitacle d'un véhicule et émettent des signaux électromagnétiques qui peuvent venir interférer avec les signaux LF émis par les antennes intérieures. Si un badge se trouve dans une zone d'interférence, il ne détectera pas le signal qui lui est envoyé par les antennes intérieures car il ne distinguera pas celui-ci du bruit environnant.

Ne pas détecter un badge à l'intérieur de l'habitacle est gênant à plusieurs niveaux. Si le véhicule est équipé d'un système permettant un démarrage mains libres, le véhicule refusera de démarrer bien que le badge soit présent à l'intérieur du véhicule. De plus, il ne doit pas rester de badge à l'intérieur du véhicule lorsque les portes de celui-ci sont condamnées. En effet, si au moment de la fermeture des portières, un badge placé à l'intérieur du véhicule n'entend pas le signal qui lui est envoyé, ce signal étant brouillé par un bruit de fond trop important, les portières seront verrouillées. Si par la suite, la source de bruit de fond se met en veille, le badge sera détecté à l'intérieur du véhicule. Un tiers qui tente alors d'ouvrir les portières verrouillées précédemment recevra l'autorisation de réaliser cette opération à cause de la présence du badge oublié dans le véhicule.

La présente invention a alors pour but de fournir un procédé permettant la détection fiable d'un badge à l'intérieur d'un véhicule équipé d'un système mains libres. De préférence, la mise en oeuvre de ce procédé n'entraînera pas de surcoût du système mains libres correspondant.

A cet effet, le procédé qu'elle propose est un procédé d'émission d'une requête vers un badge d'un système mains libres dans lequel la requête est transmise par un signal d'une fréquence prédéterminée, à l'aide d'antennes destinées à émettre à l'intérieur d'une zone prédéfinie, telle par exemple un habitacle de véhicule.

Selon l'invention, l'amplitude du signal transmettant une seule et même requête varie au cours de la transmission de cette même requête entre deux valeurs extrêmes (A1, A2), et en ce que l'amplitude correspondant à la valeur extrême inférieure (A2) est suffisante pour que la partie de la requête émise avec cette amplitude minimale (A2) soit perçue uniquement dans la zone prédéfinie.

De cette manière, une partie de la requête est émise avec une amplitude telle qu'elle puisse être reçue au-delà des limites de la zone prédéfinie et une autre partie de cette même requête est émise de manière à ne pouvoir être reçue que dans cette zone. Seul donc un badge se trouvant dans la zone prédéfinie reçoit alors la totalité de la requête et est susceptible de répondre correctement à celle-ci.

Pour éviter que des variations trop importantes de l'amplitude du signal ne fasse perdre au badge récepteur le signal, on prévoit de préférence que la variation d'amplitude du signal est progressive.

Afin d'améliorer la qualité de la réception du signal, au moins la moitié de la requête est avantageusement transmise avec une amplitude maximale.

Dans une forme de réalisation préférée, l'amplitude du signal est plus importante en début de requête qu'en fin de requête. Dans ce cas, une variante d'exécution préférentielle prévoit que l'amplitude du signal est mesurée en début de requête et que l'amplitude mesurée est comparée à l'amplitude théorique d'émission afin de régler de façon précise l'amplitude du signal en fin de requête. De cette manière, en fin de requête, on est assuré d'avoir à chaque signal émis une même amplitude et donc une même portée du signal.

A titre d'exemple numérique, l'amplitude maximale d'émission est comprise avantageusement entre 115% et 150% de l'amplitude minimale d'émission.

Les détails et avantages de la présente invention ressortiront mieux de la description qui suit, faite en référence au dessin schématique annexé sur lequel :
Figure 1 schématise sous forme d'un organigramme un procédé selon l'invention, et
Figure 2 représente une trame d'un signal porteur d'une requête dans un procédé selon l'invention.

Le procédé décrit ci-après concerne un système d'accès et/ou démarrage mains libres d'un véhicule automobile. Le système d'accès mains libres permet à un utilisateur pour l'accès au véhicule de verrouiller et de déverrouiller les portières de son véhicule sans avoir à utiliser une clé mécanique classique. L'utilisateur porte simplement un badge qui se présente par exemple sous la forme d'une carte électronique. La détection de ce badge et son identification autorise le verrouillage et le déverrouillage lorsque l'utilisateur les sollicite et qu'il porte le badge sur lui. Une fois dans le véhicule, un système de démarrage mains libres permet à l'utilisateur portant un badge autorisé sur lui à démarrer le véhicule par simple pression sur un bouton se trouvant au tableau de bord.

Classiquement, un véhicule équipé d'un système mains libres comporte un premier groupe d'antennes, appelées par la suite antennes intérieures, capable d'émettre un signal électromagnétique à l'intérieur de l'habitacle du véhicule. Un second groupe d'antennes, appelées par la suite antennes extérieures émet quant à lui un signal électromagnétique du même type que celui émis par les antennes intérieures mais à l'extérieur du véhicule. Le signal électromagnétique émis par ces antennes est un signal de type LF (Low Frequency ou basse fréquence) qui présente par exemple une fréquence de 125 kHz. Le signal émis intègre une requête émise en direction des badges susceptibles de recevoir le signal. Un badge qui reconnaît alors le signal, répond à la requête. Cette réponse est généralement intégrée à un signal d'une fréquence de 433 MHz. En fonction de la réponse faite, le badge est identifié et éventuellement considéré comme un badge autorisé.

Pour déterminer si le badge se trouve à l'intérieur de l'habitacle, un signal est envoyé aux antennes intérieures qui réalisent alors une émission correspondante tandis qu'aucun signal n'est envoyé aux antennes extérieures de telle sorte qu'elles restent muettes. Les antennes intérieures sont généralement considérées comme fiables. Dans les systèmes mains libres de l'art antérieur, la puissance d'émission des antennes intérieures est réglée de telle sorte que le champ émis par celles-ci ne déborde pas hors de l'habitacle du véhicule. De ce fait, les signaux émis ont une amplitude relativement faible et sont sensibles aux bruits ambiants. De plus, la puissance émise par les antennes, et donc l'amplitude des signaux correspondants, peut varier en fonction des dispersions de l'émetteur, en fonction notamment de paramètres extérieurs tels la température.

La solution proposée par la présente invention consiste à augmenter la puissance émise par les antennes intérieures pendant une partie de l'émission du signal et de la transmission de la requête. Une partie de la requête est quant à elle émise de telle sorte qu'elle ne puisse être reçue que par un badge se trouvant à l'intérieur de la zone considérée, ici l'habitacle du véhicule. Un badge situé à l'extérieur de l'habitacle, à proximité de celui-ci, pourra recevoir une partie de la trame émise mais comme il lui manque une partie de la requête, il ne pourra répondre à celle-ci, ou tout du moins sa réponse ne permettra pas son identification. Un tel procédé est décrit plus dans le détail ci-après en référence au dessin annexé.

Un générateur de sinusoïde 2 génère une porteuse d'une fréquence de 125 kHz. Ce signal est d'une longueur prédéfinie et est émis à intervalles de temps réguliers. Une horloge 4 gère la durée de chaque signal ainsi que l'intervalle de temps séparant deux signaux consécutifs. Un dispositif de contrôle d'amplitude 6 agit quant à lui sur l'amplitude de la porteuse.

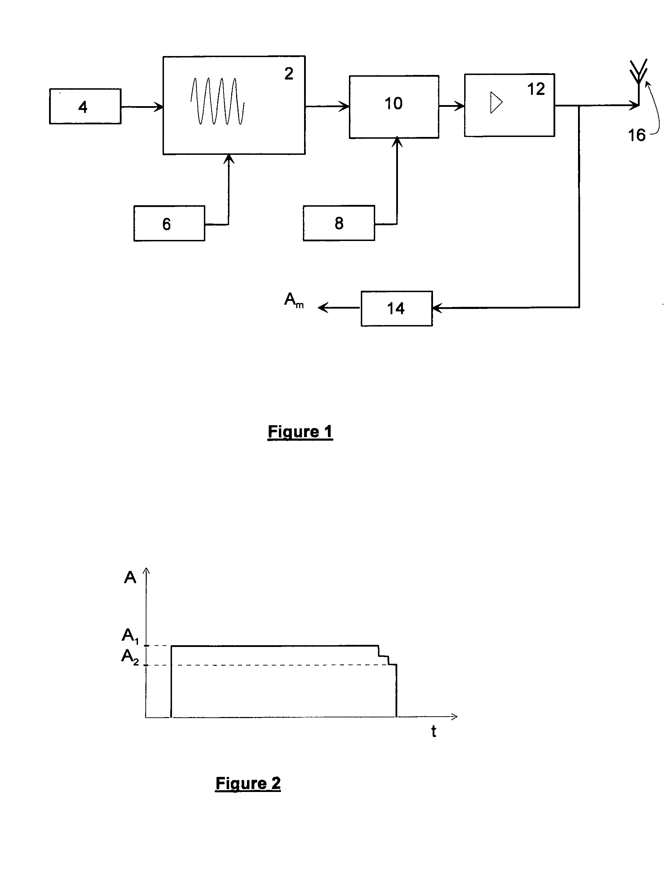

La figure 2 représente schématiquement une telle porteuse. Sur cette figure, on a représenté, pour une trame complète (requête), l'amplitude (A) du signal en fonction du temps (t).

Au début de l'émission, l'amplitude de la porteuse a une valeur A1. Cette amplitude est conservée sur environ 90 % de la durée d'émission de la trame complète. En fin d'émission, l'amplitude de la porteuse prend une valeur A2, avec A2 < A1. La valeur A2 est déterminée de telle sorte que le signal alors émis ne puisse être reçu par un badge, compte-tenu de la sensibilité de ce dernier, qu'à l'intérieur de l'habitacle du véhicule.

Le passage de l'amplitude A1 à l'amplitude A2 se fait progressivement. Dans l'exemple représenté sur la figure 2, on remarque un palier intermédiaire. Une décroissance progressive peut également être envisagée ou la présence de plusieurs paliers. En effet, pour éviter que le badge ne perde le signal qu'il reçoit, il faut éviter de trop fortes variations d'amplitude de ce signal.

Des données à émettre 8 sont intégrées à ce signal porteur. Ces données constituent la requête. La requête est donc constituée d'un seul et même signal complet envoyé vers le badge. Ce signal comporte toutes les données à émettre 8. L'intégration des données 8 au signal est réalisée au niveau d'un modulateur de données 10. On suppose ici par exemple que les données sont réparties tout au long de la trame. Il est important qu'une partie des données soit contenue dans la partie de la trame dont l'amplitude est A2.

Le signal composé d'une part de la porteuse et d'autre part des données formant une requête, est alors amplifié dans un amplificateur 12 avant d'être envoyé vers les antennes intérieures 16.

Dans une variante préférée, un dispositif de mesure d'amplitude 14 mesure l'amplitude du signal en sortie de l'amplificateur 12, juste avant son émission par les antennes intérieures. L'amplitude mesurée est appelée Am.

De cette manière, il est possible de contrôler au mieux l'amplitude du signal, notamment en fin de signal. Pendant la première phase d'émission de la trame, lorsque l'amplitude a une valeur A1, le système mains libres peut calculer le rapport A1 théorique / A1m. A1 théorique est la valeur théorique que l'on souhaite donner à l'amplitude du signal en début d'émission et A1m est la valeur de l'amplitude effectivement mesurée en début d'émission. Ce rapport est alors introduit au niveau du dispositif de contrôle d'amplitude 6 en fin d'émission de la trame. De cette manière, on obtient alors toujours la même amplitude A2 en fin d'émission. Il est ainsi possible de parfaitement maîtriser la portée de l'émission des antennes intérieures.

Dans le procédé décrit ci-dessus, il faut que l'amplitude en début de trame soit toujours supérieure à la valeur A2 théorique, ceci quelle que soit la dérive de l'émetteur. A titre d'exemple numérique, on peut par exemple prévoir que A1 = 1,3 A2.

Le procédé décrit ci-dessus permet d'avoir une détection de badge à l'intérieur de l'habitacle d'un véhicule insensible, ou quasi insensible, aux parasites. En effet, pour être perturbé par un parasite, il faudrait que celui-ci survienne uniquement lorsque le signal émis est le plus faible. La probabilité pour qu'un tel parasite survienne juste en fin d'émission de trame devient négligeable.

On remarque également que le procédé ci-dessus permet une réception du début de la trame avec un meilleur rapport signal sur bruit que les procédés de l'art antérieur. La transmission du signal est de ce fait plus fiable.

La présente invention ne se limite pas à la forme de réalisation du procédé décrit ci-dessus à titre d'exemple non limitatif. Elle s'étend au contraire aux variantes de réalisation à la portée de l'homme du métier dans le cadre des revendications ci-après.

Ainsi par exemple, la partie du signal d'amplitude moindre pourrait se trouver non pas en fin de trame mais au milieu, voire en début de trame.

Le contrôle de la puissance émise par les antennes est facultatif. Ce contrôle pourrait aussi être réalisé de façon différente. En effet, on pourrait prévoir dans l'habitacle du véhicule une antenne étalon qui capterait le signal émis et mesurerait le champ magnétique réel perçu. Il est alors possible de modifier l'amplitude du signal émis en fonction du champ magnétique mesuré au niveau de l'antenne étalon.

## Revendications

1. Procédé d'émission d'une requête vers un badge d'un système mains libres dans lequel la requête est transmise par un signal d'une fréquence prédéterminée, à l'aide d'antennes destinées à émettre à l'intérieur d'une zone prédéfinie, telle par exemple un habitacle de véhicule,
**caractérisé en ce que** l'amplitude du signal transmettant une seule et même requête varie au cours de la transmission de cette même requête entre deux valeurs extrêmes (A1, A2), et **en ce que** l'amplitude correspondant à la valeur extrême inférieure (A2) est suffisante pour que la partie de la requête émise avec cette amplitude minimale (A2) soit perçue uniquement dans la zone prédéfinie.

2. Procédé d'émission selon la revendication 1, **caractérisé en ce que** la variation d'amplitude du signal est progressive.

3. Procédé d'émission selon l'une des revendications 1 ou 2, **caractérisé en ce qu'**au moins la moitié de la requête est transmise avec une amplitude maximale (A1).

4. Procédé d'émission selon l'une des revendications 1 à 3, **caractérisé en ce que** l'amplitude du signal est plus importante en début de requête qu'en fin de requête.

5. Procédé d'émission selon la revendication 4, **caractérisé en ce que** l'amplitude du signal est mesurée en début de requête et **en ce que** l'amplitude mesurée (Am) est comparée à l'amplitude théorique d'émission afin de régler de façon précise l'amplitude du signal en fin de requête.

6. Procédé d'émission selon l'une des revendications 1 à 5, **caractérisé en ce que** l'amplitude maximale (A1) d'émission est comprise entre 115% et 150% de l'amplitude minimale (A2) d'émission.
